# EUROPÄISCHE PATENTSCHRIFT

(11) **EP 1 101 784 B1**
(45) Veröffentlichungstag und Bekanntmachung des Hinweises auf die Patenterteilung: **13.06.2007**
(21) Anmeldenummer: 00124210.6
(22) Anmeldetag: 09.11.2000
(51) Int. Cl.: C08G 18/66, C08G 18/73, C08G 18/75

(54) **Aliphatische thermoplastische Polyurethane, Verfahren zu ihrer Herstellung und ihre Verwendung**
Aliphatic thermoplastic polyurethanes, process for their preparation and their use
Polyuréthanes aliphatiques thermoplastiques, procédé pour leur préparation et leur utilisation

(30) Priorität: 22.11.1999 US 447025
(43) Veröffentlichungstag der Anmeldung: 23.05.2001
(73) Patentinhaber: Bayer MaterialScience AG, 51368 Leverkusen (DE); BAYER CORPORATION, Pittsburgh, PA 15205-9741 (US)
(72) Erfinder: Kaufhold, Wolfgang, Dr., 51061 Köln (DE); Hoppe, Hans-Georg, 42799 Leichlingen (DE); Bräuer, Wolfgang, Dr., 51375 Leverkusen (DE); Wussow, Hans-Georg, Dr., 40597 Düsseldorf (DE); Manning, Steven, Dr., Wheeling, WV 26003 (US)

(56) Entgegenhaltungen:
- EP-A- 1 010 712
- WO-A-97/44373
- DE-A- 19 757 569
- DATABASE WPI Week 9547 Derwent Publications Ltd., London, GB; AN 1995-363366 XP002176462 "cOVER FOR HOUSING AIR BAG DEVICE FOR AUTOMOBILE" & JP 07 246901 A (ASAHI KASEI), 26. September 1995 (1995-09-26)

## Beschreibung

Die Erfindung betrifft aliphatische thermoplastische Polyurethane (TPU) mit verbesserten Eigenschaften, Verfahren zu ihrer Herstellung und ihre Verwendung.

Die heutigen Anforderungen an Materialien für den Einsatz in der Innenausstattung von Kraftfahrzeugen, vor allem in Oberflächenverkleidungen von Instrumententafeln (IT), insbesondere dann wenn der Beifahrer-Airbag als unsichtbarer, integraler Bestandteil der IT konzipiert ist, sind sehr vielschichtig. Dies bedeutet, dass nur solche Materialien eingesetzt werden können, die die komplette Kombination des Anforderungsprofils, wie z.B. Licht-, Wärme- und Hydrolysestabilität ebenso erfüllen, wie ein sprödfreies Öffnen des Beifahrer-Airbags auch bei -30°C und tiefer. Wird auch nur eine dieser wesentlichen Bedingungen des Anforderungskataloges der Automobilindustrie nicht erfüllt, ist das Material für diese Anwendung nicht geeignet.

Aromatische thermoplastische Polyurethane (aromatische TPU) sind aufgrund ihres Aufbaus aus aromatischen Diisocyanaten nicht lichtstabil. Bei Farbeinstellungen von Formkörpern entsteht durch Lichteinwirkung eine starke Vergilbung und selbst bei schwarzen Formkörpern kommt es zu einer Farb- und Glanzgradveränderung.

In DE-C 42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten hergestellt wird. Die Polyolkomponente setzt sich zusammen aus 60 bis 80 Gewichtsteilen eines aliphatischen Polycarbonatdiols mit einem Molekulargewicht M̅ₙ von 2000 und 40 bis 20 Gewichtsteilen eines Polydiols auf Basis Adipinsäure, Hexandiol und Neopentylglykol mit einem Molekulargewicht M̅ₙ von 2000. 1,6-Hexamethylendiisocyanat in einem Äquivalenzverhältnis von 2,8:1,0 bis 4,2:1,0 bezogen auf das Polyolgemisch und 1,4-Butandiol als Kettenverlängerungsmittel, wobei das Äquivalenzverhältnis des 1,4-Butandiols bezogen auf das Polyolgemisch 1,3:1,0 bis 3,3:1,0 beträgt, werden eingesetzt. Diese Formmasse erfüllt alle Anfoderungen an Licht-, Wärme-, Hydrolyse- und Narbenstabilität, hat aber den Nachteil, dass sie auf Grund ihrer T_{G} von ≥ -45°C bei Beifahrer-Airbag-Schussversuchen bei -30°C zu spröde ist (einige Automobilfirmen fordern diese Kälteflexibilität), weshalb dieses Material für diese Anwendung (IT mit intergriertem, unsichtbarem Beifahrer-Airbag) ungeeignet ist.

In US-A-5 824 738 wird ein lichtstabiles, aliphatisches TPU beschrieben, dass sich auch nach intensiver künstlicher Bewitterung durch eine sehr geringe Vergilbung auszeichnet. Das beschriebene lichtstabile TPU besteht zum einen aus einer kritischen Kombination von UV-Stabilisator, Antioxidationsmittel und Pigment. Diese lichtstabilen TPU auf Basis von H₁₂-MDI (hydriertes MDI = H₁₂-MDI) weisen zwar eine sehr niedrige T_{G} von ca. -68°C auf, erfüllen aber die Anforderungen der meisten Automobilfirmen an die Beständigkeit in der Wärmelagerung nicht.

Aufgabe der vorliegenden Erfindung war es daher, sowohl licht- und wärme- als auch hydrolysestabile, bei niedrigen Temperaturen nicht zur Sprödigkeit neigenden thermoplastische Polyurethane (TPU) sowie ein Verfahren zu ihrer Herstellung zur Verfügung zu stellen.

Diese Aufgabe konnte mit den erfindungsgemäßen thermoplastischen Polyurethanen gelöst werden.

Gegenstand der vorliegenden Erfindung sind aliphatische thermoplastische Polyurethane mit einer Reißfestigkeit und Reißdehnung nach Wärmelagerung (500 h/120°C), die mindestens 60 % (vorzugsweise mindestens 70 %) der Ausgangsreißfestigkeit und Ausgangsreißdehnung vor der Wärmelagerung beträgt, und einer Glasübergangstemperatur T_{G} (gemessen mittels der dynamisch-mechanischen Analyse (DMS) im Zugmodus, die im Folgenden näher beschrieben wird) von kleiner oder gleich -50°C und mit einer Reißfestigkeit und Reißdehnung nach Hydrolyselagerung (bei 80°C und nach 7 Tagen), die mindestens 80 % (vorzugsweise mindestens 85 %) der Ausgangsreißfestigkeit und -reißdehnung beträgt, und mit einer Härte von 70 bis 95 Shore A (bevorzugt 70 bis 90 Shore A) erhältlich aus
A) aliphatischen Diisocyanaten, wie Hexamethylendiisocyanat (HDI), Dicyclohexylmethandiisocyanat (hydriertes MDI) oder Isophorondiisocyanat (IPDI) oder Gemische davon,
B) Polyolen ausgewählt aus der Gruppe bestehend aus Polycaprolactondiol mit einem mittleren Molekulargewicht zwischen 1000 und 5000 g/Mol und einem Polyetherpolyol/Polyesterpolyol-Gemisch mit einem mittleren Molekulargewicht zwischen 600 und 10 000 g/Mol, bestehend aus 80 bis 20 Gew.-Teilen Polyetherpolyol und 20 bis 80 Gew.-Teilen Polyesterpolyol,
C) Kettenverlängerer mit einem mittleren Molekulargewicht von 60 bis 500 g/Mol,
D) UV-Stabilisatoren in einer Menge von 0,4 bis 0,9 Gew.-% bezogen auf A) + B) + C),
E) Antioxidationsmitteln in einer Menge von 0,2 bis 5,0 Gew.-% bezogen auf A) + B) + C),
F) Hydrolyseschutzmitteln (wie z.B. Carbodiimide) in einer Menge von 0 bis 2,0 Gew.-%, vorzugsweise von 0,2 bis 2,0 Gew.-%, bezogen auf das Polyesterpolyol,
G) gegebenenfalls Katalysatoren und
H) gegebenenfalls weiteren üblichen Hilfsmitteln und Zusatzstoffen,
wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

Die Testbedingungen der Hydrolyselagerung und der Wärmelagerung sind später näher definiert.

Es sind also nur TPU geeignet, die eine Abnahme der Reißfestigkeit und Reißdehnung nach Wärmelagerung (500 h/120°C) von weniger als 40 % (bevorzugt weniger als 30 %) und gleichzeitig eine Abnahme der Reißfestigkeit mit Reißdehnung nach Hydrolyselagerung (80°C/7Tage) von weniger als 20 % (vorzugsweise weniger als 15 %) aufweisen.

Bei Einsatz von Polycaprolactondiol als Polyesterpolyol wird ein Hydrolyseschutzmittel nicht benötigt. Polycaprolactondiol kann ohne Polyetherpolyol eingesetzt werden.

Die obige Reihenfolge der Komponenten A bis H, bedeutet keine Aussage über die Herstellung der erfindungsgemäßen TPU. Die erfindungsgemäßen TPU können in verschiedenen Verfahren hergestellt werden, wobei die Varianten untereinander gleichwertig sind.

Die erfindungsgemäßen TPU auf Basis zweier unterschiedlicher aliphatischer Diisocyanate "A1" und "A2" können beispielsweise, wie später beschrieben, in einem Reaktionsprozeß zum TPU "A1-2" hergestellt werden. Man kann jedoch auch in bekannter Weise zunächst das TPU "A1" auf Basis des aliphatischen Diisocyanates "A1" und getrennt davon das TPU "A2" auf Basis des aliphatischen Diisocyanates "A2" herstellen, wobei die übrigen Komponenten B bis H identisch sind. Danach werden dann TPU "A1" und TPU "A2" in bekannter Weise im gewünschten Verhältnis zu TPU "A1-2" gemischt (z.B. mit Extrudern oder Knetern).

Die erfindungsgemäßen TPU auf Basis von Polyolgemischen können ebenfalls durch Einsatz von Polyolgemischen (Polyol B1 und Polyol B2) (z.B. Mischaggregate) in einem Reaktionsprozeß, wie später näher beschrieben, zum TPU B1-2 hergestellt werden. Zum anderen kann in bekannter Weise zunächst getrennt das TPU B1 auf Basis von Polyol B1 und getrennt davon das TPU B2 auf Basis von Polyol B2 hergestellt werden, wobei die restlichen Komponenten A und C bis H identisch sind. Danach werden TPU B1 und B2 in bekannter Weise im gewünschten Verhältnis zum TPU B1-2 gemischt (z.B. mit Extrudern oder Knetern).

Bevorzugt wird als Polyolkomponente ein Gemisch aus 20 bis 80 Gew.-% eines Polyetherpolyols mit einem mittleren Molekulargewicht von 1000 bis 8000 g/Mol und 80 bis 20 Gew.-% eines Polyalkandioladipats oder eines Polycaprolactondiols mit einem mittleren Molekulargewicht von 1000 bis 8000 g/Mol eingesetzt.

Bevorzugt wird als Polyolkomponente auch Polycaprolactondiol mit einem Molekulargewicht von 1000 bis 5000 g/mol eingesetzt.

Besonders bevorzugt besteht die Polyolkomponente aus einem Gemisch aus 30 bis 70 Gew.-% eines Polyetherpolyols mit einem mittleren Molekulargewicht von 1000 bis 8000 g/Mol und 70 bis 30 Gew.-% eines Polyalkandioladipats oder eines Polycaprolactondiols mit einem mittleren Molekulargewicht von 1000 bis 8000 g/Mol.

Ist das Polyalkandioladipat in der Polyolmischung empfindlich gegenüber Hydrolyse, sollten bekannte Antihydrolysemittel (wie beispielsweise Carbodiimide, siehe Kunststoffhandbuch, Polyurethanes, Volume 7) zum Polyalkandioladipat zugegeben werden.

Liegt der Anteil des Polyalkandioladipates im Polyolgemisch über 25 Gew.-% und ist die Säurezahl des Polyesterpolyols größer als 0,03 sollten dem Polybutandioladipat bekannte Hydrolyseschutzmittel (wie z.B. Carbodiimide, siehe auch Kunststoffhandbuch, Polyurethane, Band 7) zugesetzt werden.

Liegt der Anteil des Polyetherpolyols im Polyolgemisch über 40 Gew.-% sollte mindestens 0,5 Gew.-% Antioxidationsmittel (bezogen auf TPU aus A)+B)+C)) zugesetzt werden.

Als UV-Stabilisatoren wird besonders bevorzugt ein Gemisch von sogenannten gehinderten Amin-Stabilisatoren (HALS) und Hydroxyphenylbenzotriazolen in einem Gewichtsverhältnis von 2:1 bis 1:2 eingesetzt.

Geeignete Antioxidationsmittel und UV-Stabilisatoren werden in R. Gächter, H. Müller (Ed.): Taschenbuch der Kunststoff-Additive, 3. Ausgabe, Hanser Verlag, München 1989, beschrieben.

Bei Anwendungen mit geringeren Anforderungen an die Lichtstabilität, z.B. dunkel eingefärbten Formmassen können Teile des aliphatischen Diisocyanats durch aromatische Diisocyanate ersetzt werden. Diese sind in Justus Liebigs Annalen der Chemie 562, S.75-136 beschrieben. Beispiele sind 2,4 Toluylendiisocyanat, Gemische aus 2,4- und 2,6 Toluylendiisocyanat, 4,4'-, 2,2'- und 2,4'-Diphenylmethandiisocyanat, Gemische aus 2,4- und 4,4'-Diphenylmethandiisocyanat, urethanmodifizierte, flüssige 2,4- und/oder 4,4'-Diphenylmethandiisocyanate, 4,4'-Diisocyanatodiphenylethan(1,2) und 1,5- Naphthylendiisocyanat.

Als Komponente D) werden solche Verbindungen eingesetzt, die in R. Gächter, H. Müller (Ed.): Taschenbuch der Kunststoff-Additive, 3. Ausgabe, Hanser Verlag, München 1989, Kapitel "Polyurethane" beschrieben sind.

Als Komponente B) werden lineare hydroxylterminierte Polyole mit einem mittleren Molekulargewicht von 600 bis 10000 g/Mol, bevorzugt von 1000 bis 8000 g/Mol eingesetzt. Produktionsbedingt enthalten diese oft kleine Mengen an nichtlinearen Verbindungen. Häufig spricht man daher auch von "im Wesentlichen linearen Polyolen". Diese Polyole sind ebenfalls als Komponente B) geeignet.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 10000, bevorzugt von 1000 bis 8 000 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im Wesentlichen linearen Polyetherdiole besitzen Molekulargewichte von 600 bis 10 000, bevorzugt von 1000 bis 8 000. Sie können sowohl einzeln als auch in Form von Mischungen untereinander zur Anwendung kommen.

Besonders bevorzugt sind hydroxylgruppenhaltige Polymerisationsprodukte des Tetrahydrofurans und Polyetherdiole auf Basis Ethylenoxid und/oder Propylenoxid.

Als Kettenverlängerungsmittel C) werden aliphatische Diole oder (cyclo)aliphatische Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol, oder (cyclo)-aliphatische Diamine, wie z.B. Isophorondiamin, Ethylendiamin, 1,2-Propylendiamin, 1,3-Propylendiamin, N-Methyl-propylen-1,3-diamin, N,N'-Dimethylethylendiamin. Es können auch Gemische der oben genannten Kettenverlängerer eingesetzt werden. Daneben können auch kleinere Mengen an Triolen zugesetzt werden.

Besonders bevorzugt ist 1,6-Hexandiol als Kettenverlängerungsmittel, gegebenenfalls in Abmischung mit bis zu 20 Gew.-% Kettenverlängerer mit einem mittleren Molekulargewicht von 60 bis 500 g/Mol.

Bei Anwendungen mit geringeren Anforderungen an die Lichtstabilität, z.B bei dunkel eingefärbten Formmassen, können Teile der aliphatischen Diole und Diamine durch aromatische Diole und Diamine ersetzt werden. Beispiele für geeignete aromatische Diole sind Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Ein weiterer Gegenstand der Erfindung ist ein Verfahren zur kontinuierlichen Herstellung der erfindungsgemäßen thermoplastischen Polyurethane, welches dadurch gekennzeichnet ist, dass das Polyol / das Polyolgemisch B) und der Kettenverlängerer C) kontinuierlich gemischt werden und danach mit dem Diisocyanat/Diisocyanatgemisch A) intensiv in einem Statikmischer mit einem Längen/Durchmesser-Verhältnis im Bereich von 8:1 bis 16:1 innerhalb von maximal 5 Sekunden homogen vermischt werden, wobei die Temperaturen der beiden Gemische vor dem Eintritt in den Statikmischer zwischen 60 und 150°C liegen und sich die Temperaturen der beiden Gemische um nicht mehr als 20°C, bevorzugt 10°C unterscheiden und anschließend die Reaktion in einem Austragsgefäß (z.B. in einem Extruder) zu Ende geführt wird und das so erhaltene Produkt gegebenenfalls granuliert wird.

Bevorzugt wird die Reaktion in Gegenwart eines Katalysators durchgeführt.

Bevor die Komponenten (A) und (B)+(C) kontinuierlich in den Reaktor eingeleitet werden, müssen sie getrennt voneinander, vorzugsweise in einem Wärmetauscher, auf eine Temperatur zwischen 60 und 150°C, vorzugsweise zwischen 80 und 120°C erwärmt werden. Erfindungsgemäß wesentlich ist, dass sich die Temperaturen der Komponenten (A) und (B)+(C) vor der Zusammenführung im Reaktor um weniger als 20°C unterscheiden. Vorzugsweise sollte die Temperaturdifferenz zwischen den Komponentenströmen (A) und (B)+(C) < 10°C, besonders bevorzugt < 5°C sein.

Die so erhaltene Mischung wird dann in einem beliebigen Reaktor, vorzugsweise einem Extruder oder einem Reaktionsrohr, zum TPU umgesetzt.

Erfindungsgemäß wird die Polyaddition vorzugsweise in einem isolierten und vorzugsweise beheizbaren Statikmischer durchgeführt. Dieser hat den Vorteil, dass er keine beweglichen Teile aufweist und dass eine homogene, nahezu rückvermischungsfreie Durchmischung in kürzester Zeit erfolgt. Erfindungsgemäß einsetzbare Statikmischer sind in Chem.-Ing. Techn. 52, Nr.4 auf den Seiten 285-291 sowie in "Mischen von Kunststoff und Kautschukprodukten", VDI-Verlag, Düsseldorf 1993 beschrieben.

Bevorzugt werden Statikmischer gemäß DE-C 23 28 795 eingesetzt. Die Statikmischer weisen bevorzugt ein Länge/Durchmesserverhältnis von 8:1 bis 16:1, besonders bevorzugt von 10:1 bis 14:1 auf. Es ergibt sich eine Verweilzeit in dem Statikmischer von < 5 Sekunden, bevorzugt < 2,5 Sekunden. Die Statikmischer werden vorzugsweise aus Edelstahl, besonders bevorzugt aus V4A gefertigt.

Ein weiterer Gegenstand der Erfindung ist ein Verfahren zur kontinuierlichen Herstellung der erfindungsgemäßen thermoplastischen Polyurethane, welches dadurch gekennzeichnet ist, dass das Polyol/Polyolgemisch B) und der Kettenverlängerer C) kontinuierlich gemischt werden, danach mit dem Hexamethylendiisocyanat zur Reaktion gebracht wird, danach mit dem anderen (zweiten) aliphatischen Diisocyanat abgemischt und zur Reaktion gebracht wird, die Reaktion in einem Austragsgefäß zu Ende geführt wird und das Produkt gegebenenfalls granuliert wird. Diese Verfahrensvariante ist besonders bevorzugt.

Das Verfahren kann auch so durchgeführt werden, dass das Gemisch mit dem anderen (zweiten) aliphatischen Diisocyanat zur Reaktion gebracht wird, danach mit Hexamethylendiisocyanat abgemischt und zur Reaktion gebracht wird, die Reaktion in einem Austragsgefäß zu Ende gebracht wird und das Produkt gegebenenfalls abschließend granuliert wird.

Die erfindungsgemäßen thermoplastischen Polyurethane können auch nach dem Prepolymerverfahren hergestellt werden, wobei zunächst das Diisocyanat/Diisocyanatgemisch mit dem Polyol/Polyolgemisch gemischt und unter Erhalt eines Prepolymeren zur Reaktion gebracht wird und dieses Prepolymer in einem zweiten Schritt mit dem Kettenverlängerer vermischt und zur Reaktion gebracht wird.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten, UV-Stabilisatoren, Antioxidationsmitteln, Hydrolyseschutzmitteln und gegebenenfalls Katalysatoren können auch Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Gleitmittel werden vorzugsweise in Mengen von 0,1 bis 1,0 Gew.-% bezogen auf A) + B) + C) zugesetzt.

Erfindungsgemäße TPU können auch durch Compounds verschiedener TPU hergestellt werden, wobei nicht jedes einzelne TPU alle erfindungsgemäßen Eigenschaften erfüllen muss.

Die erfindungsgemäßen TPU können zur Herstellung von Formkörpern, insbesondere zur Herstellung von Extrudaten (z.B. Folien) und Spritgießteilen eingesetzt werden. Durch ihre Eigenschaften sind sie besonders im Automobilinnenbereich bevorzugt. Des weiteren können die erfindungsgemäßen TPU als sinterfähiges Pulver zur Herstellung von Flächengebilden und Hohlkörpern verwendet werden.

Die Erfindung soll anhand der nachfolgenden Beispiele näher erläutert werden.

### Beispiele

### Herstellung TPU und Spritzplatten

Die TPU wurden folgendermaßen kontinuierlich hergestellt:

Das Gemisch aus Polyol/Polyolgemisch B), Kettenverlängerer C) und Dibutylzinndilaurat wurde in einem Kessel unter Rühren auf ca. 110°C erhitzt und zusammen mit dem entsprechenden Diisocyanat, welches mittels Wärmeaustauscher auf ca. 110°C erhitzt wurde, durch einen Statikmischer der Firma Sulzer (DN6 mit 10 Mischelementen und einer Scherrate von 500 s⁻¹) intensiv gemischt und dann in den Einzug einer Schnecke (ZSK 32) geführt.

Die TPU-Blends in Beispiel 8 und 9 wurden durch Mischen der TPU aus den Beispielen 1 und 7 und anschließendes compoundieren mit einem Brabender Plasti-Corder PL2000 erhalten.

Das jeweilige Granulat wurde getrocknet und dann jeweils zu mehreren Spritzplatten verspritzt. An einem Teil der Spritzplatten wurden jeweils DMS-Messungen, zur Bestimmung der T_{G}, Zugversuche zur Bestimmung der Reißdehnung und Reißfestigkeit vor Wärme- bzw. Hydrolyselagerung durchgeführt. Der andere Teil der Spritzplatten wurde jeweils der nachfolgend beschriebenen Hydrolyse- bzw. Wärmelagerung unterworfen und anschließend wurden ebenfalls Zugversuche zur Bestimmung der Reißdehnung und Reißfestigkeit durchgeführt.

| | |
|---|---|
| DBTL: | Dibutylzinndilaurat |
| DE2020: | Polycarbonatdiol auf 1,6-Hexandiol-Basis mit mittlerem Molekulargewicht M̅ₙ = 200 g/Mol |
| PE 225B: | Polybutandioladipat mit mittlerem Molekulargewicht M̅ₙ = 2250 g/Mol |
| Capa^{®} 225: | Polycaprolactondiol mit Mn ca. 2000 g/Mol (Fa. Solvay Interox) |
| 1,4BDO: | 1,4-Butandiol |
| Terathane 2000^{®}: | Polytetrahydrofurandiol mit M̅ₙ = 2000 g/Mol (Firma Du Pont) |
| Acclaim^{®} 2220: | Polyetherpolyol mit Polyoxypropylen-Polyoxethyleneinheiten (mit ca. 85% primären Hydroxylgruppen und einem mittleren Molekulargewicht von Mₙ ca. 2000 g/Mol Fa. Lyondell) |
| Acclaim^{®} 4220: | Polyetherpolyol mit Polyoxypropylen-Polyoxethyleneinheiten (mit ca. 85% primären Hydroxylgruppen und einem mittleren Molekulargewicht von Mₙ ca. 4000 g/Mol Fa. Lyondell) |
| HDI: | Hexamethylendiisocyanat |
| H₁₂-MDI: | Isomerengemisch von Dicyclohexylmethandiisocyanat |
| Abril^{®} 10DS: | Bisstearylamid (Fa. Würtz GmbH) |
| Irganox^{®} 1010: | Tetrakis[methylen-(3,5-di-tert-butyl-4-hydroxyhydrocinnamate)]methan (Fa. Ciba) |
| Tinuvin^{®} 328: | 2-(2'-Hydroxy-3'-5'-di-tert-amylphenyl)benzotriazol (Fa. Ciba) |
| Tinuvin^{®} 622: | Dimethylsuccinatpolymer mit 4-Hxdroxy-2,2,6,6-tetramethyl-1-piperidin ethanol (Fa. Ciba) |
| 1,6 HDO: | 1,6-Hexandiol |
| Stabaxol^{®} P200: | Aromatisches Polycarbodiimid (Fa. Rhein-Chemie) |

### Zusammensetzung der TPU

| TPU | Diisocyanat | | Polyol 1 | | Polyol 2 | | 1,4BDO | 1,6HDO | DBTL |
|---|---|---|---|---|---|---|---|---|---|
| | Mole | | Mole | | Mole | | Mole | Mole | ppm |
| Vergleich 1 | 5,15 | HDI | 1,0 | De2020 | 0,43 | PE225B | 3,77 | - | 40 |
| Vergleich 2 | 8,66 | H₁₂-MDI | 1,0 | Acclaim 4220 | - | - | 7,66 | - | 100 |
| 1 | 4,91 | HDI | 1,0 | PE225B | 0,43 | Acclaim 2220 | - | 3,53 | 40 |
| 2 | 6,74 | HDI | 1,0 | PE225B | 1,0 | Acclaim 2220 | - | 4,95 | 40 |
| 3 | 4,23 | HDI | 1,0 | PE225B | 0,25 | Terathane 2000 | - | 3,02 | 40 |
| 4 | 4,80 | HDI | 1,0 | PE225B | 0,43 | Terathane 2000 | - | 3,42 | 40 |
| 5 | 3,32 | HDI | 1,0 | Capa225 | - | - | - | 2,36 | 40 |
| 6 | 3,22 | HDI | 1,0 | Capa225 | - | - | 2,26 | - | 40 |
| 7 | 7,51 | H₁₂-MDI | 1,0 | PE225B | 0,43 | Acclaim 2220 | 6,59 | - | 70 |

| | | | | | | | | | |
|---|---|---|---|---|---|---|---|---|---|
| TPU 8 ist ein Kompound bestehend aus 70 Gewichtsteilen TPU 1 und 30 Gewichtsteilen TPU 7. TPU 9 ist ein Kompound bestehend aus 30 Gewichtsteilen TPU 1 und 70 Gewichtsteilen TPU 7. | | | | | | | | | |

Die TPU enthalten folgende Additive:

| TPU | Gew.-% bez. aufTPU (A) + B) + C) |
|---|---|
| 1, 7, 8, 9 | 0,3 % Abril 10DS, 0,5 % Irganox 1010, 0,2 % Tinuvin 328, |
| | 0,6 % Tinuvin 622, 1,0% Stabaxol P200 (bez. auf Polyesterpolyol) |
| 2, 3, 4 | 0,3 % Abril 10DS, 1,0 % Irganox 1010, 0,2 % Tinuvin 328, |
| | 0,6 % Tinuvin 622, 1,0% Stabaxol P200 (bez. aufPolyesterpolyol) |
| 5, 6 | 0,3 % Abril 10DS, 1,0 % Irganox 1010, 0,2 % Tinuvin 328, |
| | 0,6 % Tinuvin 622 |
| Vergleich 1 | 0,2 % Abril 10DS, 0,5 % Irganox 1010, 0,2 % Tinuvin 328, |
| | 0,6 % Tinuvin 622 |
| Vergleich 2 | 0,5 % Abril 10DS, 1,0% Irganox 1010, 0,6 % Tinuvin 328, 1,3 % Tinuvin 622 |

### Ergebnisse:

Härte in Shore A und T_{G} aus DMS der Original Spritzplatten

| | Härte in Shore A | T_{G} in °C |
|---|---|---|
| Vergleich 1 | 90 | -45 |
| Vergleich 2 | 84 | -68 |
| Beispiel 1 | 88 | -54 |
| Beispiel 2 | 87 | -56 |
| Beispiel 3 | 87 | -56 |
| Beispiel 4 | 83 | -57 |
| Beispiel 5 | 84 | -54 |
| Beispiel 6 | 87 | -55 |
| Beispiel 8 | 81 | -53 |
| Beispiel 9 | 71 | -51 |

Prozentualer Abbau der Reißdehnung und Reißfestigkeit nach Wärmelagerung (500 h/120°C) und Hydrolyselagerung (80°C/7 Tage).

| | nach Wärmelagerung | | nach Hydrolyselagerung | |
|---|---|---|---|---|
| | %Reißfestigkeit | %Reißdehnung | %Reißfestigkeit | %Reißdehnung |
| Vergleich 1 | 83 | 95 | 94 | 96 |
| Vergleich 2 | 32 | 13 | 100 | 100 |
| Beispiel 1 | 83 | 95 | 94 | 96 |
| Beispiel 2 | 72 | 83 | 93 | 92 |
| Beispiel 3 | 91 | 80 | 88 | 87 |
| Beispiel 4 | 88 | 78 | 90 | 90 |
| Beispiel 5 | 92 | 87 | 91 | 93 |
| Beispiel 6 | 91 | 89 | 92 | 91 |
| Beispiel 8 | 80 | 82 | 93 | 92 |
| Beispiel 9 | 85 | 81 | 91 | 93 |

Die prozentuale Änderung von Reißfestigkeit und Reißdehnung errechnet sich folgendermaßen: Reißfestigkeit/Reißdehnung (Wert nach Hydrolyse- bzw. Wärmelagerung) dividiert durch Reißfestigkeit/Reißdehnung (Wert vor Hydrolyse- bzw. Wärmelagerung) mulitpliziert mit 100 ergibt %Reißfestigkeit/Reißdehnung.

### Testbedingungen

Aus den TPU wurden rechteckige Spritzplatten (125 mm x 50 mm x 1 mm) hergestellt.

### Dynamisch-mechanische Analyse (DMS)

Aus den Spritzplatten wurden Rechtecke (30 mm x 10 mm x 1 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast dient dazu, im Zeitpunkt negativer Deformationsamplitude die Probe noch ausreichend gespannt zu halten.

Die Glasübergangstemperatur T_{G} wurde aus dem Maximum E" bestimmt.

Die DMS-Messungen wurden mit dem Seiko DMS Modell 210 der Firma Seiko mit 1 HZ im Temperaturbereich von -150°C bis 200°C mit einer Heizrate von 2°C/min durchgeführt.

### Wärmelagerung:

Die Spritzplatten wurden hängend im Umlufttrockenschrank bei 120°C (±2°C Toleranz) für 500 Stunden gelagert.

### Hydrolyselagerung:

Die Spritzplatten wurden hängend bei 80°C (±2°C Toleranz) in entionisiertem Wasser für 7 Tage gelagert.

### Zugversuch:

Reißdehnung und Reißfestigkeit wurden bei Raumtemperatur an S1-Stäben (entspricht Prüfkörper Typ5 nach EN ISO 527,ausgestanzt aus Spritzplatten) vor und nach Lagerung gemäß DIN 53455 mit einer Zuggeschwindigkeit von 200 mm/min durchgeführt.

## Patentansprüche

1. Thermoplastische Polyurethane mit einer Reißfestigkeit und Reißdehnung nach Wärmelagerung (500 h/120°C), die mindestens 60 % der Ausgangsreißfestigkeit und der Ausgangsreißdehnung vor der Wärmelagerung beträgt, und einer Glasübergangstemperatur T_{G} (gemessen mittels der dynamisch-mechanischen Analyse (DMS) im Zugmodus) von kleiner oder gleich -50°C und mit einer Reißfestigkeit und Reißdehnung nach Hydrolyselagerung (bei 80°C und nach 7 Tagen) die mindestens 80 % der Ausgangsreißfestigkeit und der Ausgangsdehnung vor der Hydrolyselagerung beträgt und mit einer Härte von 70 bis 95 Shore A erhältlich aus
A) aliphatischen Diisocyanaten, wie Hexamethylendiisocyanat (HDI), Dicyclohexylmethandiisocyanat (hydriertes MDI) oder Isophorondiisocyanat (IPDI) oder Gemische davon,
B) Polyolen ausgewählt aus der Gruppe bestehend aus Polycaprolactondiol mit einem mittleren Molekulargewicht zwischen 1000 und 5000 g/Mol und einem Polyetherpolyol/Polyesterpolyol-Gemisch mit einem mittleren Molekulargewicht zwischen 600 und 10 000 g/Mol, bestehend aus 80 bis 20 Gew.-Teilen Polyetherpolyol und 20 bis 80 Gew.-Teilen Polyesterpolyol,
C) Kettenverlängerer mit einem mittleren Molekulargewicht von 60 bis 500 g/Mol,
D) UV-Stabilisatoren in einer Menge von 0,4 bis 0,9 Gew.-% bezogen auf A) + B) + C),
E) Antioxidationsmitteln in einer Menge von 0,2 bis 5,0 Gew.-% bezogen auf A) + B) + C),
F) Hydrolyseschutzmitteln (wie z.B. Carbodiimide) in einer Menge von 0 bis 2,0 Gew.-% bezogen auf das Polyesterpolyol,
G) gegebenenfalls Katalysatoren und
H) gegebenenfalls weiteren üblichen Hilfsmitteln und Zusatzstoffen,
wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

2. Thermoplastische Polyurethane gemäß Anspruch 1 erhältlich aus A), B), D), E), F), G), H) und
C) 80 bis 100 Gew.-% 1,6-Hexandiol und 0 bis 20 Gew.-% Kettenverlängerer mit einem mittleren Molekulargewicht von 60 bis 5 00 g/Mol,
wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

3. Verfahren zur kontinuierlichen Herstellung von thermoplastischen Polyurethanen gemäß Anspruch 1 oder 2, **dadurch gekennzeichnet, dass** das Polyol/das Polyolgemisch und der Kettenverlängerer kontinuierlich gemischt werden und danach mit dem Diisocyanat/Diisocyanatgemisch intensiv in einem Statikmischer mit einem Längen/Durchmesser-Verhältnis im Bereich von 8:1 bis 16:1 innerhalb von maximal 5 Sekunden homogen vermischt werden, wobei die Temperatur der beiden Gemische vor dem Eintritt in den Statikmischer zum einen zwischen 60 und 150°C liegt und zum anderen sich die Temperatur der beiden Gemische um nicht mehr als 20°C, bevorzugt 10°C unterscheiden und anschließend die Reaktion in einem Austragsgefäß (z.B. in einem Extruder) zu Ende geführt wird und das so erhaltene Produkt gegebenenfalls granuliert wird.

4. Verfahren zur kontinuierlichen Herstellung von thermoplastischen Polyurethanen gemäß Anspruch 1 oder 2, **dadurch gekennzeichnet, dass** das Polyol/Polyolgemisch und der Kettenverlängerer kontinuierlich gemischt werden, danach mit Hexamethylendiisocyanat zur Reaktion gebracht werden, danach ein anderes (zweites) aliphatisches Diisocyanat zugemischt und zur Reaktion gebracht wird, die Reaktion in einem Austragsgefäß zu Ende geführt wird und das Produkt gegebenenfalls granuliert wird.

5. Verfahren zur kontinuierlichen Herstellung von thermoplastischen Polyurethanen gemäß Anspruch 1 oder 2, **dadurch gekennzeichnet, dass** das Polyol/Polyolgemisch und der Kettenverlängerer kontinuierlich gemischt werden, das Gemisch mit dem anderen aliphatischen Diisocyanat zur Reaktion gebracht wird, danach Hexamethylendiisocyanat zugegeben wird, die Reaktion in einem Austragsgefäß zu Ende gebracht wird und das Produkt gegebenenfalls abschließend granuliert wird.

6. Verfahren zur kontinuierlichen Herstellung von thermoplastischen Polyurethanen gemäß Anspruch 1 oder 2 nach dem Prepolymerverfahren, **dadurch gekennzeichnet, dass** zunächst das Diisocyanat/-Diisocyanatgemisch mit dem Polyol/Polyolgemisch gemischt und unter Erhalt eines Prepolymeren zur Reaktion gebracht wird und dieses Prepolymer in einem zweiten Schritt mit dem Kettenverlängerer vermischt und zur Reaktion gebracht wird.

7. Verwendung der thermoplastischen Polyurethane gemäß Anspruch 1 oder 2 bzw. der nach den Verfahren gemäß den Ansprüchen 3 bis 6 hergestellten thermoplastischen Polyurethane zur Herstellung von Formkörpern.

8. Verwendung gemäß Anspruch 7 zur Herstellung von Extrudaten und Spritzgießteilen.

9. Verwendung der thermoplastischen Polyurethane gemäß Anspruch 1 oder 2 bzw. der nach den Verfahren gemäß den Ansprüchen 3 bis 6 hergestellten thermoplastischen Polyurethane als sinterfähiges Pulver zur Herstellung von Flächengebilden und Hohlkörpern.

10. Formkörper erhältlich aus einem thermoplastischen Polyurethan gemäß Anspruch 1 oder 2 oder aus einem nach den Verfahren gemäß den Ansprüchen 3 bis 6 hergestellten thermoplastischen Polyurethan.

## Claims

1. Thermoplastic polyurethanes having an ultimate tensile strength and an elongation at break after hot storage (500 hours at 120°C) which amount to at least 60 % of the initial ultimate tensile strength and initial elongation at break before hot storage, and having a glass transition temperature T_{G} (as measured by means of dynamic mechanical analysis (DMS) in tensile mode) of less than or equal to -50°C, and having an ultimate tensile strength and an elongation at break after hydrolytic storage (at 80°C and after 7 days) which amount to at least 80 % of the initial ultimate tensile strength and initial elongation before hydrolytic storage, and having a hardness of 70 to 95 Shore A, obtainable from
A) aliphatic diisocyanates such as hexamethylene diisocyanate (HDI), dicyclohexylmethane diisocyanate (hydrogenated MDI) or isophorone diisocyanate (IPDI) or mixtures of the same,
B) polyols selected from the group comprising polycaprolactone diol with a mean molecular weight between 1,000 and 5,000 g/mol and a polyether polyol/polyester polyol mixture with a mean molecular weight between 600 and 10,000 g/mol, comprising 80 to 20 parts by weight of polyether polyol and 20 to 80 parts by weight of polyester polyol,
C) a chain extender with an average molecular weight of 60 to 500 g/mol,
D) UV stabilisers in an amount from 0.4 to 0.9 wt. % with respect to A) + B) + C),
E) antioxidants in an amount from 0.2 to 5.0 wt. % with respect to A) + B) + C),
F) anti-hydrolysis agents (such as carbodiimides for example) in an amount from 0 to 2.0 wt. % with respect to the polyester polyol,
G) optionally catalysts, and
H) optionally further conventional auxiliary substances and additives,
wherein the equivalent ratio of diisocyanate A) to polyol B) is between 1.5:1.0 and 10:1.0 and wherein the NCO characteristic number (formed from the quotient comprising the equivalent ratio of isocyanate groups divided by the sum of the hydroxyl groups from the polyol and the chain extender, multiplied by 100) is from 95 to 105.

2. Thermoplastic polyurethanes according to claim 1, obtainable from A), B), D), E), F), G), H) and
C) 80 to 100 wt. % of 1,6-hexanediol and 0 to 20 wt. % of chain extender with a mean molecular weight of 60 to 500 g/mol,
wherein the equivalent ratio of diisocyanate A) to polyol B) is between 1.5:1.0 and 10:1.0 and wherein the NCO characteristic number (formed from the quotient comprising the equivalent ratio of isocyanate groups divided by the sum of the hydroxyl groups from the polyol and the chain extender, multiplied by 100) ranges from 95 to 105.

3. A process for the continuous production of thermoplastic polyurethanes according to claim 1 or 2, **characterised in that** the polyol/the polyol mixture and the chain extender are continuously mixed and are thereafter intensively and homogeneously mixed with the diisocyanate/diisocyanate mixture in a static mixer with a length/diameter ratio within the range from 8:1 to 16:1 for a maximum of 5 seconds, wherein firstly the temperature of the two mixtures before they enter the static mixer is between 60 and 150°C and secondly the temperatures of the two mixtures do not differ by more than 20°C, preferably by not more than 10°C, and the reaction is subsequently brought to completion in a discharge vessel (e.g. in an extruder) and the product which is thus obtained is optionally granulated.

4. A process for the continuous production of thermoplastic polyurethanes according to claim 1 or 2, **characterised in that** the polyol/polyol mixture and the chain extender are continuously mixed and are thereafter reacted with hexamethylene diisocyanate, a different (second) aliphatic diisocyanate is thereafter admixed and reacted, the reaction is brought to completion in a discharge vessel and the product is optionally granulated.

5. A process for the continuous production of thermoplastic polyurethanes according to claim 1 or 2, **characterised in that** the polyol/polyol mixture and the chain extender are continuously mixed, the mixture is reacted with the different aliphatic diisocyanate, thereafter hexamethylene diisocyanate is added, the reaction is brought to completion in a discharge vessel and finally the product is optionally granulated.

6. A process for the continuous production of thermoplastic polyurethanes according to claim 1 or 2 by the prepolymer method, **characterised in that** the diisocyanate/diisocyanate mixture is first mixed with the polyol/polyol mixture and is reacted with the formation of a prepolymer, and in a second step said prepolymer is mixed with the chain extender and reacted.

7. The use of the thermoplastic polyurethanes according to claim 1 or 2 or of the thermoplastic polyurethanes produced by the processes according to claims 3 to 6 for the production of mouldings.

8. A use according to claim 7 for the production of extruded products and injection moulded parts.

9. The use of the thermoplastic polyurethanes according to claim 1 or 2 or of the thermoplastic polyurethanes produced by the processes according to claims 3 to 6 as a sinterable powder for the production of sheet-like products and hollow bodies.

10. Mouldings obtainable from a thermoplastic polyurethane according to claim 1 or 2 or from a thermoplastic polyurethane produced by the processes according to claims 3 to 6.

## Revendications

1. Polyuréthanes thermoplastiques avec une résistance à la traction et un allongement à la rupture après un stockage à chaud (500 h/120°C) qui est d'au moins 60 % la résistance à la traction initiale et l'allongement à la rupture initial avant le stockage à chaud, et avec une température de transition vitreuse T_{G} (mesurée au moyen de l'analyse dynamique-mécanique (DMS) dans un mode de traction) inférieure ou égale à -50°C et avec une résistance à la traction et un allongement à la rupture après un stockage d'hydrolyse (à 80°C et après 7 jours) qui est d'au moins 80 % la résistance à la traction initiale et l'allongement à la rupture initial avant le stockage d'hydrolyse et avec une dureté de 70 à 95 Shore A obtenus à partir
A) de diisocyanates aliphatiques, comme le diisocyanate d'hexaméthylène (HDI), le diisocyanate de dicyclohexylméthane (MDI hydrogéné) ou le diisocyanate d'isophorone (IPDI) ou des mélanges de ceux-ci,
B) de polyols choisis parmi du polylcaprolactonediol avec un poids moléculaire moyen compris entre 1000 et 5000 g/mol et un mélange de polyétherpolyol/polyesterpolyol avec un poids moléculaire moyen compris entre 600 et 10 000 g/mol, constitué de 80 à 20 parties en poids de polyétherpolyol et de 20 à 80 parties en poids de polyesterpolyol,
C) d'un agent d'allongement de chaîne avec un poids moléculaire moyen de 60 à 500 g/mol,
D) de stabilisateurs UV dans une quantité de 0,4 à 0,9 % en poids rapporté à A) + B) + C)
E) d'agent antioxydation dans une quantité de 0,2 à 5,0 % en poids rapporté à A) + B) + C),
F) d'agents de protection contre l'hydrolyse (comme par exemple des carbodiimides) dans une quantité de 0 à 2,0 % en poids, rapporté au polyesterpolyol,
G) éventuellement de catalyseurs et
H) éventuellement d'autres auxiliaires et additifs classiques,
le rapport d'équivalent du diisocyanate A) au polyol B) étant compris entre 1,5:1,0 et 10,0:1,0 et l'indice NCO (obtenu à partir du quotient multiplié par 100 des rapports d'équivalents des groupes isocyanate et de la somme des groupes hydroxyle du polyol et de l'agent d'allongement de chaîne) étant compris entre 95 et 105.

2. Polyuréthanes thermoplastiques selon la revendication 1 obtenus à partir de A), B), D), E), F), G), H) et
C) de 80 à 100 % en poids de 1,6-hexanediol et de 0 à 20 % en poids d'agent d'allongement de chaîne avec un poids moléculaire moyen de 60 à 500 g/mol,
le rapport d'équivalent du diisocyanate A) au polyol B) étant compris entre 1,5:1,0 et 10,0:1,0 et l'indice NCO (formé à partir du quotient multiplié par 100 des rapports d'équivalents des groupes isocyanate et de la somme des groupes hydroxyle du polyol et de l'agent d'allongement de chaîne) étant compris entre 95 et 105.

3. Procédé pour la préparation continue de polyuréthanes thermoplastiques selon la revendication 1 ou 2, **caractérisé en ce que** l'on mélange en continu le polyol/le mélange de polyol et l'agent d'allongement de chaîne et on mélange après cela intensivement avec le diisocyanate/mélange de diisocyanate dans un mélangeur statique avec un rapport longueur/diamètre dans le domaine de 8:1 à 16:1 en l'espace de 5 secondes maximum de manière homogène, la température des deux mélanges étant avant l'entrée dans le mélangeur statique comprise entre 60 et 150°C et la température des deux mélanges n'étant entre autres pas différente de plus de 20°C, de préférence de 10°C et on amène ensuite la réaction à l'achèvement dans une cuve de sortie (par exemple dans une extrudeuse) et on granule éventuellement le produit ainsi obtenu.

4. Procédé pour la préparation continue de polyuréthanes thermoplastiques selon la revendication 1 ou 2, **caractérisé en ce que** l'on mélange en continu le polyol/mélange de polyol et l'agent d'allongement de chaîne, on fait après cela réagir avec du diisocyanate d'hexaméthylène, on ajoute après cela un autre (second) diisocyanate aliphatique et on fait réagir, on amène la réaction à l'achèvement dans une cuve de sortie et on granule éventuellement le produit.

5. Procédé pour la préparation continue de polyuréthanes thermoplastiques selon la revendication 1 ou 2, **caractérisé en ce que** l'on mélange en continu le polyol/mélange de polyol et l'agent d'allongement de chaîne, on fait réagir le mélange avec l'autre diisocyanate aliphatique, on ajoute après cela du diisocyanate d'hexaméthylène, on amène la réaction à l'achèvement dans une cuve de sortie et on granule ensuite éventuellement le produit.

6. Procédé pour la préparation continue de polyuréthanes thermoplastiques selon la revendication 1 ou 2 selon le procédé de prépolymère, **caractérisé en ce que** l'on mélange tout d'abord le diisocyanate/mélange de diisocyanate avec le polyol/mélange de polyol et on fait réagir en obtenant un prépolymère et on mélange ce prépolymère dans une seconde étape avec l'agent d'allongement de chaîne et on fait réagir.

7. Utilisation des polyuréthanes thermoplastiques selon la revendication 1 ou 2 respectivement des polyuréthanes thermoplastiques préparés selon le procédé selon les revendications 3 à 6 pour la préparation de corps moulés.

8. Utilisation selon la revendication 7 pour la préparation d'extrudés et de pièces moulées par injection.

9. Utilisation des polyuréthanes thermoplastiques selon la revendication 1 ou 2 respectivement des polyuréthanes thermoplastiques préparés selon le procédé selon les revendications 3 à 6 comme poudre pouvant être frittée destinée à la préparation de produits de surface et de corps creux.

10. Corps moulés obtenus à partir d'un polyuréthane thermoplastique selon la revendication 1 ou 2 ou à partir d'un polyuréthane thermoplastique préparé selon le procédé selon les revendications 3 à 6.
